# EUROPEAN PATENT SPECIFICATION

(11) **EP 3 787 828 B1**
(45) Date of publication and mention of the grant of the patent: **02.07.2025**
(21) Application number: 19723986.6
(22) Date of filing: 01.05.2019
(51) Int. Cl.: B23K 9/095, B23K 9/32, B23K 37/00, G06T 7/00

(54) **PORTABLE USER INTERFACE FOR A WELDING TYPE SYSTEM**
TRAGBARE BENUTZERSCHNITTSTELLE FÜR EIN SCHWEISSSYSTEM
INTERFACE UTILISATEUR PORTABLE POUR UN SYSTÈME DE TYPE SOUDAGE

(30) Priority: 01.05.2018 US 201815968318
(43) Date of publication of application: 10.03.2021
(73) Proprietor: Illinois Tool Works, Inc., Glenview, Illinois 60025 (US)
(72) Inventor: SCHNEIDER, Joseph C., Glenview, Illinois 60025 (US)
(74) Representative: HGF
(86) International application number: PCT/US2019/030164
(87) International publication number: WO 2019/213230

(56) References cited:
- WO-A1-2013/153433
- WO-A1-2017/120488
- KR-A- 20180 027 994
- KR-B1- 100 775 123
- US-A1- 2010 021 051
- US-A1- 2016 207 135
- US-A1- 2017 173 720

## Description

The present invention relates to a portable computing device according to the preamble of claim 1 (see for example US 2016/207135 A1).

Welding is a process that has increasingly become ubiquitous in all industries. While such processes may be automated in certain contexts, a large number of applications continue to exist for manual welding operations, the success of which relies heavily on the proper use, configuration, and maintenance of welding equipment. Even experienced welding operators and technicians, however, often have difficulty configuring, monitoring, and maintaining these important parameters throughout welding processes.

Additionally, the welding industry suffers from a lack of skilled operators and service technicians. It is desirable to provide real-time configuration, instruction, maintenance, and service information regarding welding equipment processes to aid a weld operator or service technician in welding production.

Further limitations and disadvantages of conventional approaches to welding will become apparent to one of skill in the art, through comparison of such approaches with some aspects of the present method and system set forth in the remainder of this disclosure with reference to the drawings.

Earlier patent application US 2017/17372 A1 discloses a welding system and welding helmet, where the welding helmet is capable of providing an image representative of information from an associated welding operation where the image appears as a head-up display (HUD) in the welding helmet. US 2010/021051 A1 discloses a visual guidance and recognition system, whereby a work piece is recognized with the system, and a manipulator is accurately positioned with respect to the work piece so that the manipulator can accurately perform its function.

### SUMMARY

A portable computing device according to an aspect of the present invention is defined in claim 1.

Further preferred embodiments of the present invention are defined in the dependent claims.

Methods and systems are provided for a portable user interface for a welding type system, substantially as illustrated by and described in connection with at least one of the figures, as set forth more completely in the claims.

### BRIEF DESCRIPTION OF THE DRAWINGS

FIG. 1 shows an exemplary arc welding system in accordance with aspects of this disclosure.
FIG. 2 shows an exemplary block diagram of a portable computing device.
FIG. 3a shows an exemplary view of a portable computing device identifying a welding device.
FIG. 3b shows an exemplary view of a portable computing device identifying a welding device interface.
FIG. 3c shows an exemplary view of a portable computing device displaying information regarding a welding interface.
FIG. 3d shows an exemplary view of a portable computing device identifying a welding device.
FIG. 3e shows an exemplary view of a portable computing device displaying information regarding a welding device.
FIG. 4a shows a flow chart of an exemplary method for identifying a welding type device, connecting with the welding device, and displaying information regarding the identified welding device.
FIG. 4b shows a flow chart of an exemplary method for identifying a welding device via image processing.

### DETAILED DESCRIPTION

Disclosed are examples of a portable computing device that can be configured to identify welding equipment, provide information regarding identified welding equipment, communicate with identified welding equipment, and configure identified welding equipment.

The welding industry suffers from a lack of skilled operators and service technicians. An operator may intend to perform welding-type activities using a welding system and/or perform maintenance on one or more components of a welding system. However, in some circumstances, an operator may be inexperienced with the particular task that the operator wishes to perform. This may occur, for example, when the operator 124 has little or no welding experience, when the operator has little or no familiarity with the equipment in the welding system, when the operator has not recently performed the task and does not remember one or more aspects of the task, or any other possible reason.

The present invention features a portable computing device that can assist an operator perform such tasks, see claim 1. The portable computing device may be a smartphone, a tablet computer, a laptop computer, and/or any other type of computing device. As discussed in more detail below, the example portable computing device presents one or more interfaces to interactively provide information related to one or more welding-type devices. Example information includes, according to the present invention, equipment configuration instructions corresponding to one or more welding-type devices, and can further include weld training instructions to be performed using one or more of the welding-type devices, instructions for a user to manipulate the welding-type device(s) before the operator commences a welding type operation, instructions for the operator to manipulate the welding-type device(s) after completing the welding type operation, equipment servicing information (e.g., diagnostic techniques, repair instructions, component replacement instructions, etc.), maintenance information (e.g., cleaning information) consumable replacement instructions, and/or any other information or instructions that may be useful to the operator.

Disclosed example portable computing devices include a camera, a display device, and a processor. The processor is configured to: access one or more images captured by the camera; identify a welding-type device based on the one or more images; and, based on the identified welding-type device, present an interface configured to interactively provide information related to the identified welding-type device.

In some example portable computing devices, the processor is configured to display the one or more images via the display device. In some example portable computing devices, the processor is configured to access the images, display the one or more images, identify the welding-type device, and display the information related to the welding-type device, substantially in real-time. In some example portable computing devices, the processor is configured to wherein the processor is configured to overlay one or more graphics on the displayed images.

In some example portable computing devices, the processor is configured to identify one or more components of the welding-type device based on the one or more images. In some example portable computing devices, the interface includes component information corresponding to the one or more components, and the one or more components are identified after the welding-type device is identified in a predetermined threshold number of the images in the series of images.

In some example portable computing devices, the processor is configured identify the welding-type device via receiving information based on identifying electronically readable indicia present in the images. In some example portable computing devices, the processor is configured identify the welding-type device via performing image recognition processing on the image to identify a welding device model.

In some example portable computing devices, the processor is configured identify the welding-type device via performing image recognition processing to identify, based on the images, at least one of: a number of input devices; a type of at least one input device; a number of display devices; a display device type; model number text; a graphic logo; input device indicator text; an input device indicator graphic; a graphical arrangement; an arrangement of user input devices, output devices, or user input devices and output devices; a communication connector type; a communication connector location; a positive power stud terminal location; a negative power stud terminal location; an air vent location; a housing size; or a housing shape.

According to the present invention, the interface is configured to provide equipment configuration instructions corresponding to the identified welding-type device. In some example portable computing devices, the interface is configured to provide weld training instructions corresponding to the identified welding-type device.

Some example portable computing devices further include a communications device to communicate with welding equipment. In some examples, the weld training instructions include instructions for a user to manipulate the welding-type device before a user commences a welding-type operation. In some examples, the weld training instructions include instructions for a user to manipulate the welding-type device after completing the welding-type operation. Some example portable computing devices further include a machine readable memory, and the weld training instructions are stored on the memory. In some examples, the processor is configured to receive weld training instructions from a server. In some examples, instructions are provided via or include a video.

Some example portable computing devices further include a communications device to communicate with welding equipment. In some examples, the processor is configured to establish communications with the welding-type device via the communications device. In some examples, the portable computing device communicates with the welding-type device via one of: Bluetooth, Wi-Fi, ZigBee, or Z-Wave. Some example portable computing devices further include an input device. In some examples, the processor is configured to receive a user input from the input device, and to configure the welding-type device according to received user input.

In some example portable computing devices, the processor is configured to: receive information regarding the welding-type device, wherein the information includes images of interior components of the welding-type device; and display the images of the interior components of the welding-type device via the display device.

In some example portable computing devices, the processor is configured to: receive equipment service information regarding the welding-type device; and display the equipment service information via the display device.

In some example portable computing devices, the processor is configured to receive information from a server regarding the welding-type device, and display the information via the display device.

In some example portable computing devices, the display device is a touchscreen. In some example portable computing devices, the processor is configured to display or hide a simulated graphic in the interface in response to at least one of a gesture or an input to an input device coupled to the processor.

In some example portable computing devices, the processor is configured to receive, via an input device, a selection of a task to be performed using the identified welding-type device. The processor is also configured to display graphics in the interface, based on locations within the images of the one or more components that are associated with the graphics, in a sequence based on the task to be performed. In some example portable computing devices, the processor is configured display simulated graphics in the interface in the sequence by displaying one or more first ones of the simulated graphics corresponding to a first step of the task; receiving an indication that the first step of the task has been performed; ending display of the one or more first ones of the simulated graphics; and displaying one or more second ones of the simulated graphics corresponding to a second step of the task.

Disclosed example portable computing devices include a display device, an RFID antenna, and a processor. The processor is configured to identify a welding-type device based on an RFID signal; and based on the identified welding-type device, present an interface configured to interactively provide information related to the identified welding-type device.

In some example portable computing devices, the interface includes component information corresponding to the one or more components of the welding-type device. According to the present invention, the interface is configured to provide equipment configuration instructions corresponding to the identified welding-type device.. In some example portable computing devices, the interface is configured provide weld training instructions corresponding to the identified welding-type device.

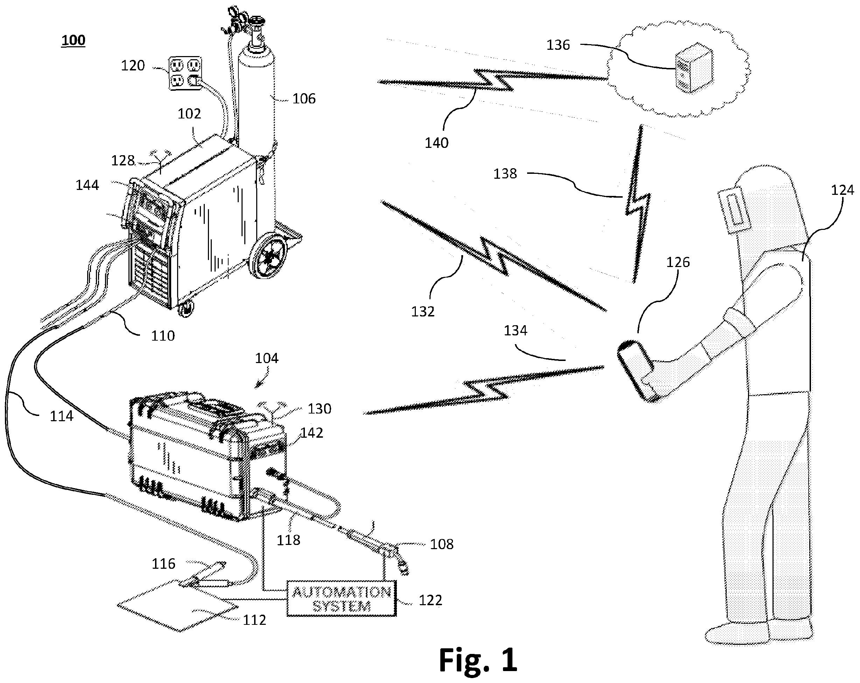

FIG. 1 is a diagram of an example welding system 100. While the welding system 100 described herein is specifically presented as a gas metal arc welding (GMAW) system 100, the welding system 100 may perform other welding-type processes (e.g., FCAW, FCAW-G, GTAW (TIG), SAW, SMAW, plasma cutting), other non-arc welding processes (e.g., friction stir, laser), auxiliary processes (e.g., induction heating, brazing, etc.) and/or hybrid-type processes, where an arc welding process is combined with an energy source, such as a laser, induction heating device, plasma, and so forth. The example welding system 100 may include one or more power sources, which may be used separately and/or in combination.

The example welding system 100 includes a welding power supply 102 (i.e., a welding power source), a welding wire feeder 104, a gas supply system 106, and a welding torch 108. The welding power supply 102 generally supplies power to the welding system 100 and/or other devices (e.g., hand tools). For welding, the welding power supply 102 is coupled to the welding wire feeder 104 via a weld cable 110, and is coupled to a workpiece 112 using a lead cable 114 having a clamp 116. In the illustrated example, the welding wire feeder 104 is coupled to the welding torch 108 via a weld cable 118 to supply welding wire and power to the welding torch 108 during operation of the welding system 100. In other examples, the welding power supply 102 may couple and directly supply power to the welding torch 108.

In the example of FIG. 1, the welding power supply 102 includes power conversion circuitry that receives input power from an alternating current power source 120 (e.g., the AC power grid, an engine/generator set, or a combination thereof), conditions the input power, and provides DC or AC output power via the weld cable 110. As such, the welding power supply 102 may power the welding wire feeder 104 that, in turn, powers the welding torch 108, in accordance with demands of the welding system 100. The lead cable 114 terminating in the clamp 116 couples the welding power supply 102 to the workpiece 112 to close the circuit between the welding power supply 102, the workpiece 112, and the welding torch 108. The welding power supply 102 may include circuit elements (e.g., transformers, rectifiers, switches, and so forth) capable of converting the AC input power to a direct current electrode positive (DCEP) output, direct current electrode negative (DCEN) output, variable polarity, or a variable balance (e.g., balanced or unbalanced) AC output, as dictated by the demands of the welding system 100 (e.g., based on the type of welding process performed by the welding system 100, and so forth).

In some examples, an automation system 122 may be used in the welding system 100. The automation system 122 may include controllers and actuators to automatically control at least a portion of the welding system 100 without additional user input. In some embodiments, the automation system 122 is connected to the power source 120, the wire feeder 104, the torch 108, or and/or the workpiece 112. The automation system 122 may be a robotic welding system that may control the relative movement between the torch 108 and the workpiece 112 according to instructions loaded to the automation system 122. In some examples, the automation system 122 may control the power supply 102 and/or the wire feeder 104 to control the weld process and the weld variables for a desired welding application.

An operator 124 may intend to perform welding-type activities using the welding system 100 and/or perform maintenance on one or more components of the welding system 100. However, in some circumstances, the operator 124 may be inexperienced with the particular task that the operator 124 wishes to perform. This may occur, for example, when the operator 124 has little or no welding experience, when the operator has little or no familiarity with the equipment in the system 100, when the operator has not recently performed the task and does not remember one or more aspects of the task, the task is particularly complex, and/or for any other reason.

To assist the operator 124, the operator 124 uses a portable computing device 126. The portable computing device 126 may be a smartphone, a tablet computer, a laptop computer, and/or any other type of computing device. As discussed in more detail below, the example portable computing device 126 presents one or more interfaces to interactively provide information related to one or more of the device(s) 102, 104 in the welding system 100. In some examples, providing information via the portable computing device 126 may include overlaying graphical information on images captured by the portable computing device 126 for display to the operator 124, providing an operating manual, and/or providing an interactive menu for tasks. According to the present invention, information includes equipment configuration instructions corresponding to one or more devices 102, 104, and can further include weld training instructions to be performed using one or more of the devices 102, 104, instructions for a user to manipulate the device(s) 102, 104 before the operator 124 commences a welding type operation, instructions for the operator 124 to manipulate the device(s) after completing the welding type operation, equipment servicing information (e.g., diagnostic techniques, repair instructions, component replacement instructions, etc.), maintenance information (e.g., cleaning information) consumable replacement instructions, and/or any other information or instructions that may be useful to the operator 124.

The portable computing device 126 includes one or more cameras to capture image data. The portable computing device 126 is configured to recognize specific models of welding equipment from image data captured by the camera when, for example, the operator 124 points the camera at the equipment.

In some examples, the welding equipment (for example the power supply 102 and the wire feeder 104) includes wireless communication antennas 128, 130. The portable computing device 126 may establish wireless communications with nearby welding equipment (e.g., the power supply 102, the wire feeder 104) via wireless communication links 132, 134 with the respective antennas 128, 130. The portable computing device 126 may identify the welding equipment based on prior recognition and/or communications (e.g., prior pairing between the portable computing device 126 and the welding equipment) and/or based on exchanging identifying data with the portable computing device 126.

Additionally or alternatively, the portable computing device 126 may establish communications with one or more server(s) 136 via wireless communication link(s) 138. The welding equipment (e.g., the power supply 102, the wire feeder 104) may also be in communication with the same server 136 or a different server via another communication link 140, which may be wireless or wired. The communication links 132, 134, 138, 140 may be any combination of wired and/or wireless communication protocols, including WiFi, Bluetooth, Bluetooth Low Energy, Z-Wave, Zigbee, UDP, TFTP, lwIP, HTTP, and/or the like. The server 136 may be, for example, a local or remote/cloud workstation(s) or one or more server(s) in a data center.

In some examples, the wire feeder 104 has a wire feeder interface 142 that includes information for an operator 124 and provides controls to set weld parameters (e.g., graphical user interfaces (GUIs), one or more controls, etc.). In some examples, the power supply 102 has a power supply interface 144 that includes information for an operator 124 and provides controls to set weld parameters (e.g., GUIs, one or more controls, etc.).

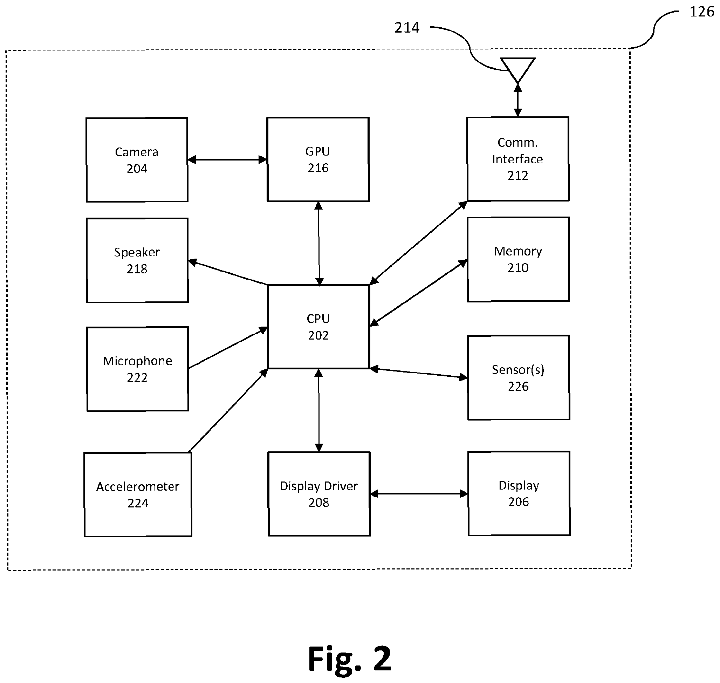

Fig. 2 is a block diagram of an example implementation of the portable computing device 126 of Fig. 1. The portable computing device 126 includes a central processing unit ("CPU") 202. The portable computing device 126 also includes one or more cameras 204 which may be connected to a graphics processing unit 216. The example camera 204 includes an optical sensor and associated data processing circuitry. The portable computing device 126 also includes a display 206, a memory 210, a communications interface and an antenna 214. In some examples, the display 206 is a touchscreen display that generates electric signals in response to user input, and can be used as a user interface. The user input can be either a touch or a gesture. In some examples, the portable computing device 126 contains a display driver 208. In some examples, the CPU 202 drives the display 206 directly. In some examples, the CPU 202 interacts directly with the camera 204, and in some examples, a graphics processing unit 216 receives input from the camera 204.

Some example cameras 204 include a high dynamic range imager or image sensor array (e.g., at least 120 dB of dynamic range) and/or native wide dynamic range imager (e.g., at least 140 dB of dynamic range). In other examples, the camera 204 includes a medium dynamic range (MDR) imager with at least 100 dB of dynamic range.

The portable computing device 126 may be capable of communicating wirelessly via multiple communication protocols. The portable computing device 126 may send and receive signals via the comm. interface 212 and the antenna 214. Example protocols include WiFi, Bluetooth, Bluetooth Low Energy, Z-Wave, Zigbee, UDP, TFTP, lwIP, HTTP, RFID and/or the like. The portable computing device 126 may also communicate via a wired connection.

The example portable computing device 126 contains additional sensors, including a microphone 222, an accelerometer 224, and/or other sensors 226. In some examples, the camera 204 faces the opposite direction of the display 206. The display 206 may show the view of the camera 204 in real time (e.g., with little or no perceptible lag between movement of the camera and corresponding changes shown on the display 206). Real-time display may be accomplished by sending images captured by the camera 204 to the CPU 202. The CPU 202 then commands the display 206 to display the images captured by the camera 204 substantially instantaneously.

While example implementations of the portable computing device 126 are described with reference to Fig. 2, other implementations may be used. For example, the GPU 216, the display driver 208, the comm. interface 212, and the memory 210 may be implemented using hardware, software, firmware, and/or any combination of hardware, software, and/or firmware. For example, components may be added, removed, replaced, combined, divided, and/or otherwise modified from the illustrated example. The CPU 202, the GPU 216, the speaker 218, the microphone 222, the accelerometer 224, the display driver 208, the sensors 226, the memory 210, the comm. interface 212 and the antenna 214 may be implemented using one or more integrated circuits and/or discrete circuits, such as general purpose processors, special purpose processors (e.g., digital signal processors), programmable logic devices, application specific integrated circuits (ASICs), systems-on-chip (SoCs), and/or any other type and/or combination of types of integrated and/or discrete circuits. Furthermore, implementations may include combinations of components and/or functions into single integrated circuit packages and/or divisions of components and/or functions into multiple integrated circuit packages.

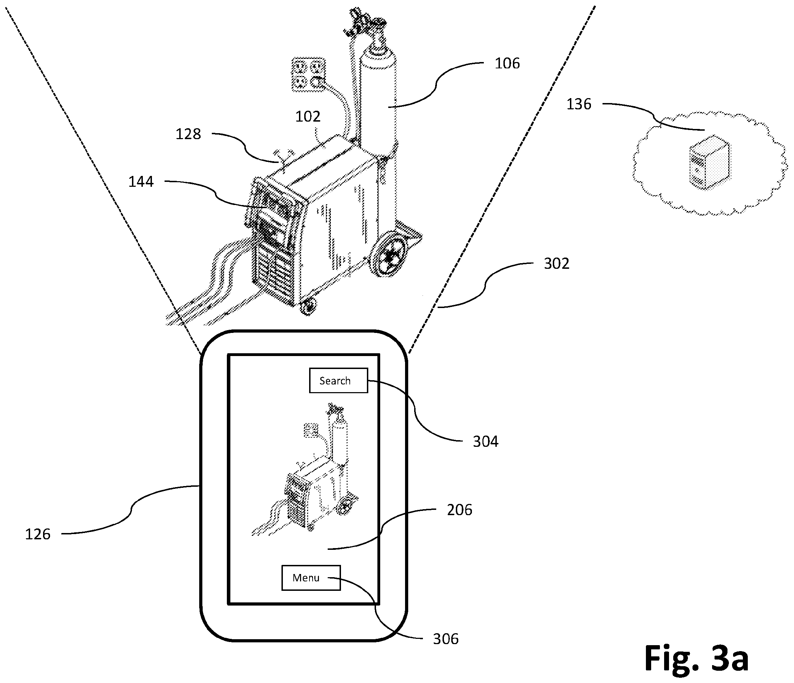

Fig. 3a shows an example of the portable computing device 126 identifying the power supply 102 via an image processing method. The portable computing device 126 may identify the power supply 102 (or other welding-type devices) in various ways. The portable computing device 126 may identify the exact model or model family of the power supply 102, or other type of welding equipment. For example, when the power supply 102 is in the field of view 302 of the camera 204, the CPU 202 may perform image processing to identify the model of the power supply 102. In some examples, the CPU 202 compares identifiable features of the power supply 102 captured by the camera 204 to characteristic features stored in memory 210 of different types of welding equipment, or to images of different types of welding equipment received from a server 136 via communications link 138. In some examples, the welding device is not identified unless the CPU 202 or GPU 216 determines there is a match in a predetermined number of images captured by the camera 204. This threshold may be required to limit false positives, and ensure that the welding device is only identified when the operator 124 focuses the camera 204 on the welding device that the operator 124 desires to identify for a reasonable amount of time (e.g., 1 second).

In some examples, the portable computing device 126 transmits live video, representative images, and/or extracted image features captured by the camera 204 and/or the GPU 216 to a server 136 via the communications link 138. The server 136 then completes the image processing and sends back information regarding the identified welding device to the portable computing device 126 via the communications link 138.

In order to command the portable computing device 126 to identify the welding device, the operator 124 may put the portable computing device 126 into an identification mode. During the identification mode, the camera 204 may turn on and begin capturing images. During the identification mode, the display 206 displays the field of view 302 of the camera 204 so that the operator 124 can see the field of view 302 of the camera 204 (e.g., as feedback to the operator 124 to point the camera 204 at the desired device). The CPU 202 or GPU 216 receives and processes the images captured by the camera 204, and substantially in real time sends the images to the display 206, which then displays the images captured by the camera 204.

If the display 206 is a touchscreen, in order to command the portable computing device 126 to identify the welding equipment, the operator 124 may press on or give some other indication to the touchscreen display 206. In some examples, the operator 124 may press on the image of the welding equipment that the operator wishes to identify. The CPU 202 may then conduct the image processing to identify the welding equipment. If more than one welding device is in the field of view 302, for example, if the power supply 102 and the wire feeder 104 are both in the field of view 302, the operator 124 may select which device the operator 124 would like the portable computing device 126 to identify. For example, the operator may indicate which welding device to identify by pressing on the image of the device on the touchscreen display 206.

During identification mode, the portable computing device 126 may automatically identify any welding equipment in the field of view 302. After identifying the welding equipment, the display 206 may show the model number or name of the welding device or some other simulated graphic indicating the identity of the welding device. The model number or name of the identified device may be overlaid on the live camera feed displayed on the display 206. The display 206 may also provide the operator 124 the option to see more information about the identified welding equipment. In some examples, after identifying a welding device, the portable computing device 126 may establish wireless communications with the identified welding device via wireless communication link 132 if the identified welding device is capable of such wireless communications.

During the identification mode, a search bar 304 may be shown on the display 206. The operator 124 may input, for example, a model number or name into the search bar 304 to attempt to identify the welding equipment. Further, a menu bar 306 may be shown on the display 206. When the operator 124 selects the menu bar 306, the display 206 shows more options to the operator 124.

Some equipment (e.g., the power supply 102) may have a barcode, or a QR code, a graphic logo, a sticker with a model ID number, or the like. The camera 204 may scan the barcode, QR code, etc. and thereby identify the power supply 102. Additionally or alternatively, the power supply 102 may include a radio frequency identification tag, which the portable computing device 126 can identify via RFID communications. In some examples, the welding equipment is be equipped with antennas (128, 130) and connects to a local wireless area network. The portable computing device 126 may be connected on the same local wireless area network. The portable computing device 126 may display to the operator 124 via the display 206 all of the devices on the local wireless area network, and the operator may select any device on the local wireless area network, thereby identifying the welding device. In such examples, the portable computing device 126 may show an image of the identified welding device retrieved from memory 210 to the display 206 so that the operator 124 may confirm that the identified welding device matches the real world welding device.

During the identification mode, the operator may speak the name of the welding equipment to be identified or speak the model number of the welding equipment to be identified. Based on the spoken information (e.g., received via the microphone 222 of the portable computing device 126), the portable computing device 126 detects the model number or model name of the welding equipment to be identified, and compares the detected name or model number to the names or model numbers stored in memory 210 or received from a server 136 via the communications link 138. The portable computing device 126 may thereby identify the welding equipment.

In some examples, the operator 124 may point the camera 204 so that the field of view 302 is looking at the welding consumables such as gas 106 and wire. The CPU 202 or GPU 216 may perform image processing to identify the consumables for the weld job and/or check the identified consumables against a selected weld procedure specification (WPS) for inconsistencies that could lead to weld defects. If such inconsistencies are identified, the portable computing device 126 alerts the operator 124 (e.g., via the display 206 and/or the speaker 218) and/or other people (e.g., via the communications interface 212), and/or disable the trigger on the weld torch 108.

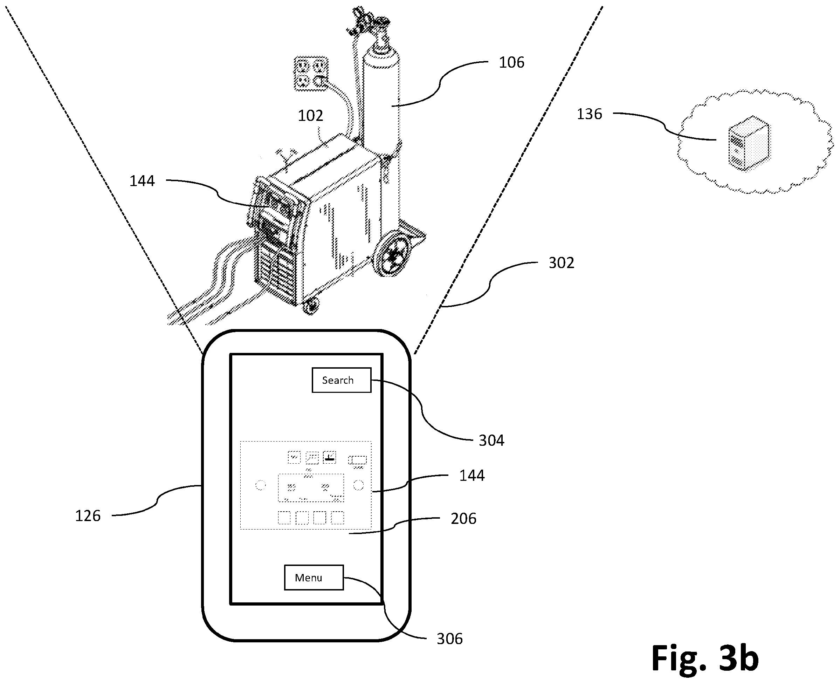

Turning to Fig. 3b, the example CPU 202 may perform image processing to identify the model of the power supply 102, or other welding equipment, by comparing images of the interface 144 of the power supply 102 to images of welding equipment interfaces (e.g., images stored in memory 210 and/or received from a server 136 via the communications link 138). The operator 124 may be able to zoom in the field of view 302 to focus on the interface 144, by interacting with the display 206. and/or by moving the portable computing device 126 closer to the interface 144. In some examples, the CPU 202 may first automatically detect an interface 144 in the field of view 302 using first image features, and then automatically focus the image processing on the interface 144 of the power supply 102 (or any other welding equipment to be identified) to identify the particular interface using second image features. The camera 204 also may have optics providing a large depth of field so that the camera 204 easily achieves focus on the desired area(s).

In some examples, the portable computing device 126 transmits live video captured by the camera 204 to a server 136 via the communications link 138, which completes the image processing, and sends back information regarding the identified welding equipment to the portable computing device 126 via the communications link 138.

In some examples, the CPU 202 or the GPU 216 can perform image processing based on images received from the camera 204 to detect the welding device based on: a number of input devices; a type of at least one input device in the image of the welding device; a number of display devices in the image of the welding device; a display device type in the image of the welding device; model number text; a graphic logo; input device indicator text; an input device indicator graphic; a graphical arrangement; an arrangement of user input devices, output devices, or user input devices and output devices; a communication connector type; a communication connector location; a positive power stud terminal location; a negative power stud terminal location; an air vent location; a housing size; and/or a housing shape.

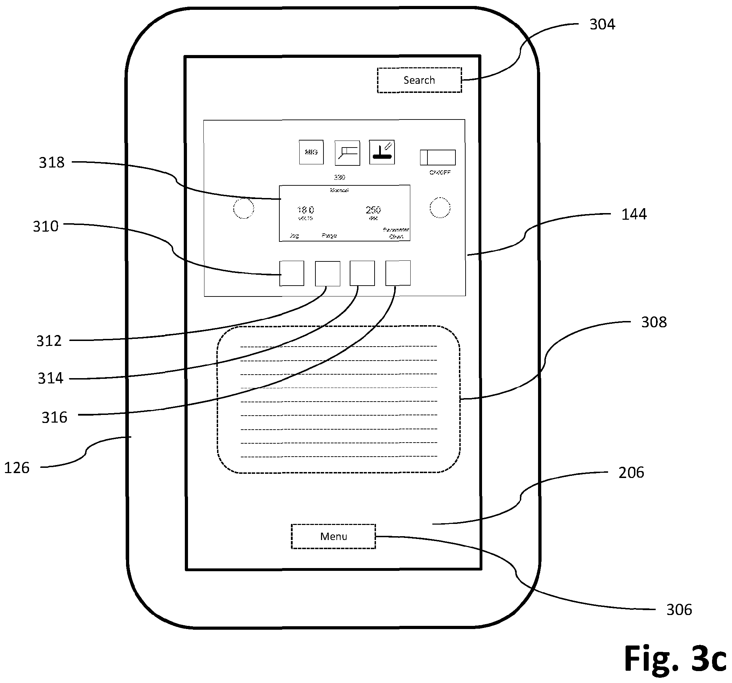

Fig. 3c illustrates the portable computing device 126 providing information regarding the identified welding device (e.g., power supply 102) to an operator 124 via the display 206. In some examples, after identifying the power supply 102, the display 206 may display various options to the operator 124. These options may be overlaid on a live feed from the camera 204, or the display 206 may show a new screen and cease displaying the live feed from the camera 204. For example, the display 206 may indicate to the operator 124 the types of weld processes (e.g., MIG, GMAW, TIG, GTAW, Arc, SMAW, Flux core, plasma cutting, etc.) the identified welding equipment is capable of performing. After indicating to the operator 124 the types of weld processes the identified device is capable of performing, the portable computing device 126 may provide the operator 124 with information regarding how to adjust the settings of the identified welding device to conduct each process. In some examples, the operator 124 may select which process the operator 124 wishes to perform, and the portable computing device 126 will then communicate to the operator 124 the information regarding how to adjust the settings of the identified welding device. Such information may be communicated to the operator 124 via displayed text on the display 206, displayed images on the display 206, displayed video on the display 206, audio instructions played through the speaker 218, or any combination thereof. In some examples, such instructions may be indicated via simulated graphics overlaid on an image of the identified device. In some examples, the simulated graphics corresponding to instructions may be overlaid on a live feed sent from the camera 204 to the display 206 in order to instruct the operator 124 how to adjust the settings of the identified welding device in the real world welding environment.

In some examples, if the identified welding device (power supply 102) and the portable computing device 126 have established a wireless communication link 132, the portable computing device 126 may send configuration commands corresponding to the operator selected process to the identified welding device (power supply 102).

The display 206 may also provide the operator 124 the option to see more technical information including: the compatible input power, compatible shielding gases to be used compatible consumable filler/wire, compatible conduits, compatible welding torches, etc. The display 206 may also provide a link to view the user manual for the identified device. The display 206 may also provide instruction regarding how to properly connect welding components. For example, the display 206 may provide instructions to the operator 124 regarding how to connect an identified power supply 102 to a wire feeder 104. Instructions may include displayed text, displayed images, displayed video, audio instructions played through the speaker 218, or any combination thereof. In some examples, the display 206 may list the types of wire feeders compatible with the identified power supply 102. The operator 124 may select which of the listed wire feeders will be connected to the power supply 102. The display 206 may then provide information regarding how to properly connect the identified power supply 102 to the selected wire feeder. Such information may be communicated to the operator 124 via displayed text on the display 206, displayed images on the display 206, displayed video on the display 206, audio instructions played through the speaker 218, or any combination thereof. In some examples, such instructions may be indicated via simulated graphics overlaid on an image of the identified device. In some examples, the simulated graphics corresponding to instructions may be overlaid on a live feed sent from the camera 204 to the display 206 in order to instruct the operator 124 how to adjust the settings of the identified welding device in the real world welding environment.

In some examples, the operator 124 may enter in a part number, for example the model number of a wire feeder, and the portable computing device 126 will inform the operator 124 via the display whether that wire feeder is compatible with the identified power supply 102. If they are compatible, the portable computing device 126 may instruct the operator 124 how to connect the power supply 102 to the wire feeder. Such instructions may be communicated to the operator 124 via one or more of displayed text on the display 206, displayed images on the display 206, displayed video on the display 206, audio instructions played through the speaker 218, and/or any other presentation technique. In some examples, such instructions may be indicated via simulated graphics overlaid on an image of the identified device. In some examples, the simulated graphics corresponding to instructions may be overlaid on a live feed sent from the camera 204 to the display 206 in order to instruct the operator 124 how to adjust the settings of the identified welding device in the real world welding environment.

The portable computing device 126 may identify both a wire feeder 104 and a power supply 102 via any of the methods described above. For example, the CPU 202 may use image processing to identify both the wire feeder 104 and the power supply 102. The CPU 202 may identify the wire feeder 104 and the power supply 102 either sequentially, or in some examples, if both the wire feeder 104 and the power supply 102 are in the same field of view 302, the CPU 202 may identify the wire feeder 104 and the power supply 102 substantially simultaneously while both are displayed on the display 206. The portable computing device 126 then may display to the operator 124 whether the identified power supply 102 and wire feeder 104 are compatible, and provide instructions regarding how to connect the power supply 102 to the wire feeder 104. Such instructions may be communicated to the operator 124 via displayed text on the display 206, displayed images on the display 206, displayed video on the display 206, audio instructions played through the speaker 218, or any combination thereof. In some examples, such instructions may be indicated via simulated graphics overlaid on an image of the identified device. In some examples, the simulated graphics corresponding to instructions may be overlaid on a live feed sent from the camera 204 to the display 206 in order to instruct the operator 124 how to adjust the settings of the identified welding device in the real world welding environment.

The display 206 may also provide programming instructions for the identified device based on a selected WPS. Instructions may include displayed text, displayed images, displayed video, audio instructions played through the speaker 218, or any combination thereof. The display 206 may also show information about the interface 144 controls, for example which knobs or buttons or other input devices control the power supply output voltage, current, pulse length, etc. The portable computing device 126 may also provide any other useful information to the operator 124 via the display 206, such as information regarding where the device may be serviced, warranty information, etc.

Fig. 3c illustrates an example where the operator 124 has selected the option that the portable computing device 126 provides more information regarding the interface 144 of the identified power supply 102 via the display 206. The user interface 144 has a display 318 which displays welding-related variables (e.g., "Voltage," "Wire Feed Speed," and "Program") and values of the corresponding welding-related variables. Example displays 318 may include liquid crystal displays (LCDs), seven-segment light emitting diodes (LEDs), organic LED (OLED) displays, and/or display devices using any other display technologies. The interface 144 also has input controls 310, 312, 314, and 316 (buttons, knobs, switches, etc.) that are used to adjust the welding-related variables (e.g., "Voltage," "Wire Feed Speed," "Pulses Per Second," and "Program") of the power supply 102. The identified power supply 102 may have a controller that uses information received via the interface 144 to modify welding-type variables that are controllable in the welding-type device 200. For example, GMAW-capable welding power supplies may have controllable variables that include output voltage, wire feed speed, wire preheating, output inductance, and/or transfer mode (e.g., spray, short circuit, etc.). As another example, SMAW-capable welding power supplies may have controllable variables that include output current and/or hot start current. The interface 144 of the identified power supply 102 (or the interface of any other identified welding device) may be used to manually control the welding-type variables of the power supply 102.

In some examples, a display area 308 of the display 206 may provide more information about the interface 144. The operator 124 may select certain features of the interface 144, for example the first input control 310 by pressing the area of the touchscreen display 206 corresponding to the first input control 310. The display 206 may then highlight that selected feature of the interface 144 (e.g., first control input 310) and the display area 308 may provide information about the operation of that selected feature (e.g., first control input 310). For example, input control 310 may control the output voltage of the power supply 102. The display area 308 may provide information to the operator 124 regarding proper welding voltages for various welding operations, and how to manually adjust the input control 310 to ensure that the power supply 102 operates at the proper output voltage.

In some examples, as described above, the operator 124 may have already selected a weld procedure or WPS the operator will perform. In such examples, the display area 308 may instruct the operator 124 how to manually adjust each input control (310, 312, 314, and 316) to ensure that the welding parameters are properly configured for the selected welding process. The display 206 may also show to the operator 124 how the interface display 318 should appear after the operator 124 has manually configured the welding device. In some examples, the display area 308 may also instruct the operator 124 how to manually adjust each input control (310, 312, 314, and 316) to ensure that the welding parameters are properly configured after the welding process is complete. The display area 308 may also provide other instructions for the operator 124 to complete after the welding process is complete in order to ensure proper shutdown of the identified welding device. Is some examples, such shutdown instructions may be communicated to the operator 124 via displayed text on the display 206, displayed images on the display 206, displayed video on the display 206, audio instructions played through the speaker 218, or any combination thereof. In some examples, such instructions may be indicated via simulated graphics overlaid on an image of the identified device. In some examples, the simulated graphics corresponding to instructions may be overlaid on a live feed sent from the camera 204 to the display 206 in order to instruct the operator 124 how to adjust the settings of the identified welding device in the real world welding environment.

In some examples, if the identified welding device (power supply 102) and the portable computing device 126 have established a wireless communication link 132, the portable computing device 126 may send configuration commands corresponding to the operator selected process to the identified welding device (e.g. power supply 102) via the wireless communication link 132. A controller within the welding device (e.g. power supply 102) receives and processes the configuration commands, and then configures the parameters of the welding device such that the welding device is correctly configured to perform the selected welding operation. For example, the welding device may be configured according a WPS selected by the operator 124 via the portable computing device 126. The welding device may send a confirmation signal via the wireless communication link 132 to the portable computing device 126 confirming that the welding device has been successfully configured to perform the selected welding operation. The portable computing device 126 may indicate the confirmation that the welding device has been properly configured for the selected welding process to the operator 124 via the display 206. The display 206 may also indicate to the operator 124 how the interface display 318 should appear after the welding device has been configured to perform the selected welding process. The display 206 may also indicate to the operator 124 how the interface display 318 should appear after the welding device has been ended in order to ensure that the welding device has been properly shutdown.

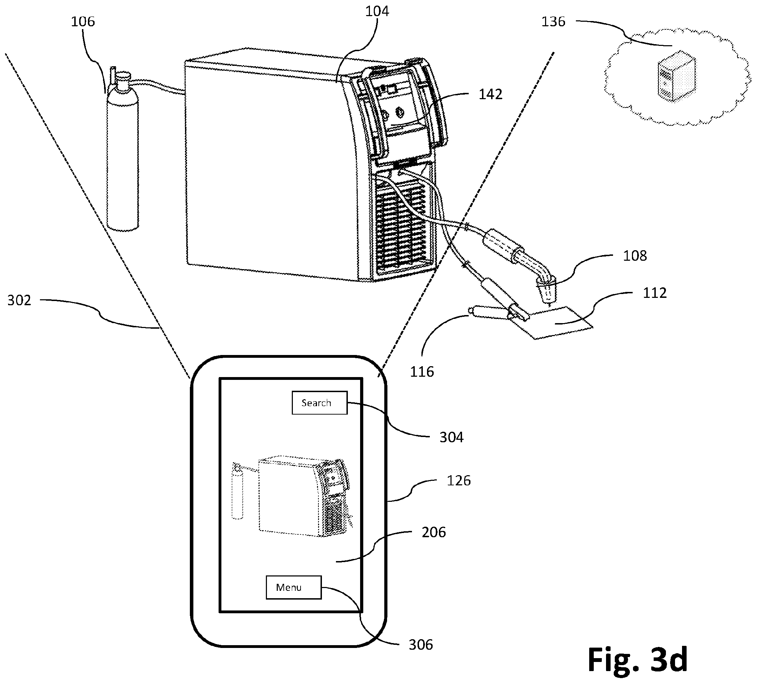

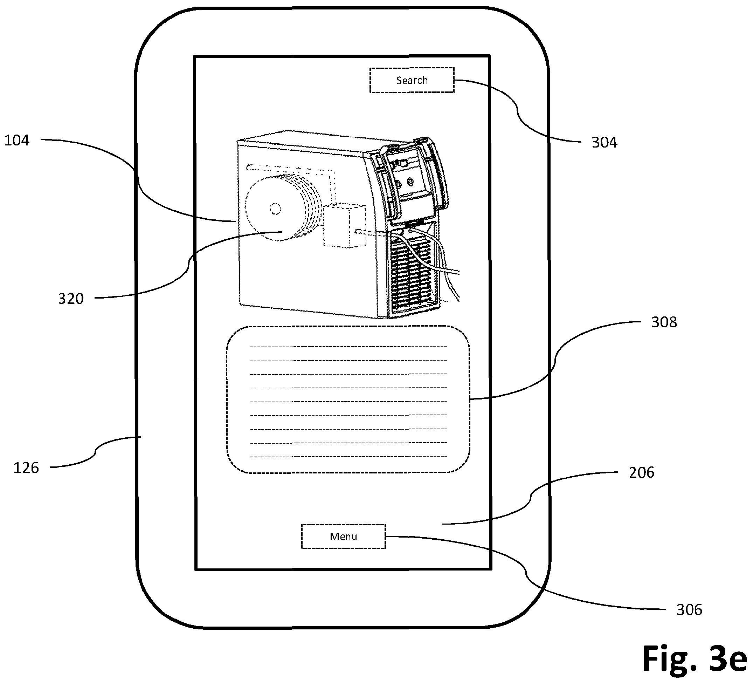

Figs. 3d and 3e illustrate an example of a welding device within the field of view 302 of the camera 204. In some examples, the portable computing device 126 may provide service or maintenance information to the operator 124 regarding the identified welding device (e.g., power supply 102 or wire feeder 104). As Fig. 3e shows, in some examples, an operator 124 may request that portable computing device 126 provide images of the interior of the housing of the welding device. For example, in Fig. 3e the display 206 shows the internal wire feed assembly 320 which comprises a wire spool, a mounting structure, and a wire driver assembly. Other internal images may be displayed as well. Internal images may be helpful for an operator 124 or a service technician. The portable computing device 126 may retrieve the internal images from memory 210, or may receive the internal images from a server 136 via wireless link 126. The portable computing device 126 may then display the internal images of the identified welding device.

In some examples, the identified welding device (e.g., power supply 102 or wire feeder 104) is equipped with a controller capable of performing diagnostic tests or keeping an error log. If the identified welding device (e.g., wire feeder 104 or power supply 102) and the portable computing device 126 have established a wireless communication link (132, 134), the portable computing device 126 may send a request that the identified welding device run diagnostic tests via the wireless communication link (132, 134). The welding device then runs the diagnostic tests, and transmits the results of the diagnostic test to the portable computing device 126. The portable computing device 126 may communicate the results of the diagnostic to the operator 124 via the display 206. The portable computing device 126 may also communicate to the operator 124 service instructions regarding fixing any issue diagnosed with the welding device during the diagnostic test. Service instructions may be communicated to the operator 124 via displayed text on the display 206, displayed images on the display 206, displayed video on the display 206, audio instructions played through the speaker 218, or any combination thereof. In some examples, the portable computing device 126 may retrieve service instructions from memory 210. In some examples, the portable computing device 126 may receive service instructions from a server 136 via a wireless link 138.

In some examples, the portable computing device 126 sends a request to the identified welding device for an error log via the wireless communication link (132, 134). The identified welding device then sends the error log to the portable computing device 126 via the wireless communication link (132, 134). The portable computing device 126 may display the error log to the operator 124 via the display. In some examples, the portable computing device 126 may run a diagnostic test based on the received error log, and then display to the operator 124 service instructions regarding fixing any issue diagnosed with the welding device during the diagnostic test. In some examples, the portable computing device 126 may retrieve service instructions from memory 210. In some examples, the portable computing device 126 may receive service instructions from a server 136 via a wireless communication link 138. In some examples, the portable computing device 126 may transmit the received error log to a server 136 via wireless communication link 138. The server 136 then may run a diagnostic test based on the received error log. The server 136 may then transmit to the portable computing device 126 service instructions regarding fixing any issue diagnosed with the welding device during the diagnostic test. The portable computing device 126 may then communicate the service instructions to the operator 124. Service instructions may be communicated to the operator 124 via displayed text on the display 206, displayed images on the display 206, displayed video on the display 206, audio instructions played through the speaker 218, or any combination thereof. In some examples, the simulated graphics corresponding to instructions may be overlaid on a live feed sent from the camera 204 to the display 206 in order to instruct the operator 124 how to adjust the settings of the identified welding device in the real world welding environment.

In some examples, the welding device may be in direct communication with the server 136 via a wireless communication link 140. The welding device may upload any error or diagnostic information to a server 136 via the wireless communication link 140. The portable computing device 126 may request that the server 136 send any diagnostic or error information regarding the identified welding device to the portable computing device 126 via communications link 138. The server 136 in response to the request then sends any diagnostic or error information regarding the identified welding device as well as service instructions regarding fixing any issue diagnosed with the welding device to the portable computing device 126 via data link 138. The portable computing device 126 may then communicate the service instructions to the operator 124. Service instructions may be communicated to the operator 124 via displayed text on the display 206, displayed images on the display 206, displayed video on the display 206, audio instructions played through the speaker 218, or any combination thereof. In some examples, the simulated graphics corresponding to instructions may be overlaid on a live feed sent from the camera 204 to the display 206 in order to instruct the operator 124 how to adjust the settings of the identified welding device in the real world welding environment.

In some examples, the portable computing device 126 may receive from a server 136 other information regarding maintenance or service of the identified welding device. For example, the server 136 may provide a troubleshooting guide for the identified welding device. The portable computing device 126 may then display the troubleshooting guide to the operator 124 via the display 206. In some examples, the server 136 may provide a list of known or common issues for the identified welding device. The portable computing device 126 may then display the list to the operator 124 via the display 206. In some examples, the operator 124 may select an issue from the displayed list of known issues. The portable computing device 126 may then communicate to the operator 124 service instructions regarding how to correct that known issue. The service instructions may be communicated to the operator 124 via displayed text on the display 206, displayed images on the display 206, displayed video on the display 206, audio instructions played through the speaker 218, or any combination thereof. In some examples, the simulated graphics corresponding to instructions may be overlaid on a live feed sent from the camera 204 to the display 206 in order to instruct the operator 124 how to adjust the settings of the identified welding device in the real world welding environment.

In some examples, the operator 124 may type in an issue regarding the identified welding device into a search bar 304. The portable computing device 126 may then request information regarding that searched issue from a server 136. The server 136 may then transmit service instructions to resolve that searched issue regarding the identified welding device. The portable computing device 126 may then communicate to the operator 124 service instructions regarding how to correct that known issue. The service instructions may be communicated to the operator 124 via displayed text on the display 206, displayed images on the display 206, displayed video on the display 206, audio instructions played through the speaker 218, or any combination thereof. In some examples, the simulated graphics corresponding to instructions may be overlaid on a live feed sent from the camera 204 to the display 206 in order to instruct the operator 124 how to adjust the settings of the identified welding device in the real world welding environment.

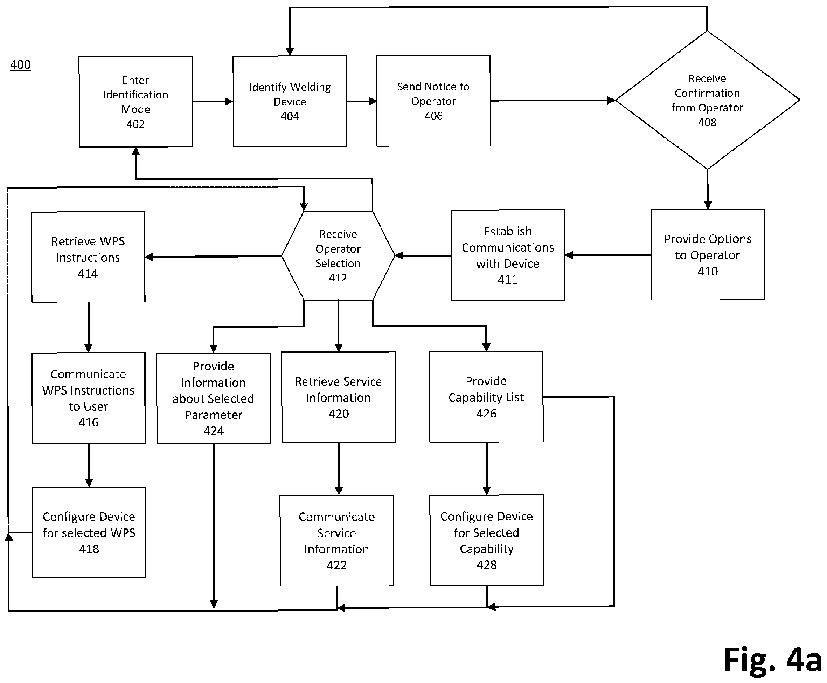

Fig. 4a shows a flow chart of an exemplary method 400 for identifying a welding type device using a portable computing device 126, connecting the portable computing device 126 to the identified welding device, and displaying information regarding the identified welding device. At block 402, an operator 124 commands the portable computing device 126 to enter an identification mode. This may include opening an application on a smartphone or tablet computer, or indicating within an application to enter an identification mode. Then at block 404, the portable computing device 126 identifies a welding device.

As explained in detail above, a welding device may be identified in various ways. For example, an operator 124 may type a model number, model name, vin number, or other identification information into a search bar. In some examples, the operator 124 may speak the identifying information and a microphone 222 on the portable computing device 126 can detect the operator 124's voice and thereby identify the welding device. In some examples, the portable computing device 126 may be connected to a wireless network, and the welding device(s) may also be connected to the wireless network. In such examples, the portable computing device 126 may identify and display all welding devices on the wireless network. In other examples, the power supply 102 may include a radio frequency identification tag, which the portable computing device 126 104 can identify.

The portable computing device 126 is equipped with a camera 204 When the operator 124 enters identification mode at block 402, the camera 204 may turn on, and the portable computing device 126 may display the camera's field of view to a display 206 on the portable computing device 126. The portable computing device 126 may then identify any welding equipment in the camera's field of view via various methods. For example, the welding device may have a barcode, or a QR code, a graphic logo, a sticker with a model ID number, or the like. The camera 204 may scan the barcode, QR code, etc. and thereby identify the welding device.

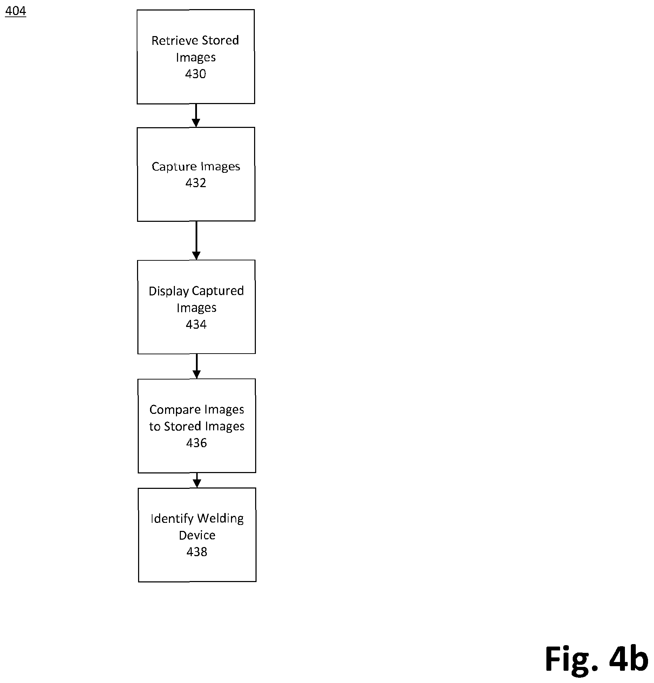

In some examples, the portable computing device 126 may identify the welding device via image processing. Fig. 4b shows an exemplary method 404 for identifying a welding device via image processing. At block 430, the portable computing device 126 retrieves stored images of welding devices. These images can be stored in memory locally on the portable computing device 126, or they may be retrieved from a server 136. At block 432, the portable computing device 126 captures images of the welding device via the camera 204. At block 434, the portable computing device 126 displays the captured images to the display of the portable computing device 126. The portable computing device 126 may display the captured images substantially in real time as the images are captured. At block 436, the portable computing device 126 compares the images to the retrieved stored images in order to identify the welding device. In some examples, the portable computing device 126 compares pixel positions of the retrieved images to pixel positions of the captured images in order to identify the welding device. At block 438, the portable computing device 126 identifies the welding device. In some examples, text or other simulated graphics may be displayed over or along with the captured images, indicating information such as the model number, model name, or other useful information regarding the identified welding device to an operator 124. The text or other simulated graphics may be overlaid onto the captured images substantially in real time so that it appears to the operator 124 that the text or other simulated graphics are overlaid on a live feed from the camera 204.

Returning to Fig. 4a, at block 406, the portable computing device 126 informs the operator 124 that the welding device has been identified. For example, the display may overlay text or other simulated graphics onto the captured images of the welding device identifying the welding device. In other examples, the display may transition to a new screen with retrieved images or information regarding the identified welding device. At block 408, the portable computing device 126 receives confirmation from the operator 124 that the welding device was correctly identified. The operator 124 may for example type into an interface that the identification is correct. In some examples, the display is a touchscreen and the operator 124 may perform a gesture on the touchscreen indicating that the identification was correct. In some examples, the operator 124 may speak a command that the identification was correct which the microphone 222 can detect. The operator 124 may also inform the portable computing device 126 that the identification is incorrect via any of the methods described above. In such cases, the process may go back to the identification process at block 404.

After receiving confirmation from the operator 124 that the identification is correct, at block 410 the portable computing device 126 displays options to the operator 124 regarding the identified welding device. For example, the operator 124 may request more information, for example control information; welding parameters; welding processes the welding device is capable of performing; a list of WPSs the welding device can be configured to perform; configuration information; service and maintenance information; or other technical information. In some examples where the welding device is connected to a wireless network, the portable computing device 126 may also provide the option to wirelessly connect with the welding device.

If the welding device is capable of wirelessly communicating, then at block 411 the portable computing device 126 may attempt to establish wireless communications with the welding device. In some examples this process may occur automatically, and in some examples this process occurs after the operator 124 requests that the portable computing device 126 connects with the identified welding device.

At block 412 the portable computing device 126 receives the operator 124 selection from the operator 124. If the operator 124 selected to perform a certain WPS, at block 414, the portable computing device 126 may retrieve the certain WPS instructions. Then at block 416, the portable computing device 126 may display those retrieved WPS instructions to the operator 124. The instructions may include configuration information for the identified welding device for the selected WPS. The retrieved instructions may also include step by step instructions for performing the selected WPS. Such instructions may include text, video, images, audio instructions, simulated graphics overlaid on a live camera feed, or some combination thereof. In some examples, if the portable computing device 126 and the identified welding device are wirelessly connected, at block 418 the portable computing device 126 may command the welding device to adjust its parameters to achieve the selected WPS. After receiving this information regarding the selected WPS, the operator 124 may choose to go back to block 412 to see the other options.

At block 420, if the operator 124 selected to see service information, the portable computing device 126 retrieves service and/or maintenance information regarding the identified welding device. The information may be retrieved for example from a local memory, from a server 136, or from the welding device via a wireless connection. In some examples, the welding device may have a memory with its service history stored on the memory. The welding device may send its service history to the portable computing device. At block 422, the portable computing device 126 displays the service information to the operator 124. The service information may include text, a link to the user manual, internal images of the welding device, audio commands, videos, or other simulated graphics. After receiving this information, the operator 124 may choose to go back to block 412 to see the other options.

If the operator 124 requested more information about a certain parameter of the identified welding device, then at block 424 the portable computing device 126 retrieves and displays the requested information. Such information may include, for example descriptions of the welding interface, for example the effect that adjusting a certain knob/button on the interface of the identified welding device. Other information, may include other welding devices the identified welding device is compatible with, the required input power, compatible welding consumables, etc. After receiving this information, the operator 124 may choose to go back to block 412 to see the other options.

If the operator 124 requested a list of capabilities of the identified welding device, at block 426, the portable computing device 126 displays a list of capabilities. This may include a list of WPSs the identified welding device may perform, or more generally the welding operations the welding device is capable of performing, for example, MIG, GMAW, TIG, GTAW, Arc, SMAW, Flux core, plasma cutting, etc. After displaying the capabilities list, in some examples, at block 428 the operator 124 may select a displayed capability. For example, the operator 124 may select to configure the identified device for MIG welding. The portable computing device 126 may then provide instructions for configuring the identified device for MIG welding as described above. In some examples, the portable computing device 126 may command the welding device to be configured for the selected capability via a wireless communication link. After receiving this information, and/or selecting a welding capability, the operator 124 may choose to see the other options at block 412.

At block 412, the operator 124 may also choose to go back to identification mode at block 402, or to exit the welding information application.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

The present methods and/or systems may be realized in hardware, software, or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present invention has been described with reference to certain implementations, it will be understood by those skilled in the art that various changes may be made and equivalents may be substituted without departing from the scope of the present invention as defined in the appended claims.

## Claims

1. A portable computing device (126), comprising:
a camera (204); and
a display device (206);
the portable computing device being **characterized by** comprising
a processor (202) configured to:
access one or more images captured by the camera;
identify a welding-type device (102, 104) based on the one or more images, wherein the welding-type device is a power supply (102) or a wire feeder (104); and
based on the identified welding-type device, present an interface on the display device (206) configured to interactively provide information related to the identified welding-type device; wherein the interface is configured to provide equipment configuration instructions corresponding to the identified welding-type device (102, 104).

2. The portable computing device (126) of claim 1, wherein the processor (202) is configured to display the one or more images via the display device (206).

3. The portable computing device (126) of claim 2, wherein the processor (202) is configured to access the images, display the one or more images, identify the welding-type device (102, 104), and display the information related to the welding-type device, substantially in real-time, or
wherein the processor is configured to overlay one or more graphics on the displayed images.

4. The portable computing device (126) of claim 1, wherein the processor (202) is configured to identify one or more components of the welding-type device based (102, 104) on the one or more images, and
optionally wherein the interface includes component information corresponding to the one or more components, the one or more components being identified after the welding-type device is identified in a predetermined threshold number of the images in the series of images.

5. The portable computing device (126) of claim 1, wherein the processor (202) is configured to identify the welding-type device (102, 104) via at least one of:
receiving information based on identifying electronically readable indicia present in the images; or
performing image recognition processing on the image to identify a welding device model.

6. The portable computing device (126) of claim 1, wherein the processor (202) is configured to identify the welding-type device (102, 104) via performing image recognition processing to identify, based on the images, at least one of: a number of input devices; a type of at least one input device; a number of display devices; a display device type; model number text; a graphic logo; input device indicator text; an input device indicator graphic; a graphical arrangement; an arrangement of user input devices, output devices, or user input devices and output devices; a communication connector type; a communication connector location; a positive power stud terminal location; a negative power stud terminal location; an air vent location; a housing size; or a housing shape.

7. The portable computing device (126) of claim 1, wherein the interface is configured to provide weld training instructions corresponding to the identified welding-type device (102, 104).

8. The portable computing device (126) of claim 7, further comprising a communications device (214) to communicate with welding equipment, and wherein the weld training instructions comprise at least one of:
instructions for a user to manipulate the welding-type device (102, 104) before a user (124) commences a welding-type operation; or
instructions for a user to manipulate the welding-type device after completing the welding-type operation.

9. The portable computing device (126) of claim 8, further comprising a machine readable memory (210) and the weld training instructions are stored on the memory, or
wherein the processor (202) is further configured to receive the weld training instructions from a server (136).

10. The portable computing device (126) of claim 7, wherein the instruction comprise a video.

11. The portable computing device (126) of claim 1, further comprising a communications device (214) to communicate with welding equipment, wherein the processor (202) is configured to establish communications with the welding-type device (102, 104) via the communications device.

12. The portable computing device (126) of claim 11, wherein the portable computing device communicates with the welding-type device (102, 104) via one of: Bluetooth, Wi-Fi, ZigBee, or Z-Wave.

13. The portable computing device (126) of claim 12, further comprising an input device (206), wherein the processor (202) is configured to receive a user input from the input device, and to configure the welding-type device (102, 104) according to received user input, and
optionally wherein the processor is further configured to:
receive information regarding the welding-type device, wherein the information includes images of interior components of the welding-type device; and
display the images of the interior components of the welding-type device via the display device (206).

14. The portable computing device (126) of claim 1, wherein the processor (202) is further configured to:
receive equipment service information regarding the welding-type device (102, 104); and
display the equipment service information via the display device (206), or wherein the processor is configured to:
receive, via an input device (206), a selection of a task to be performed using the identified welding-type device; and
display graphics in the interface, based on locations within the images of the one or more components that are associated with the graphics, in a sequence based on the task to be performed.

## Patentansprüche

1. Tragbare Computervorrichtung (126), Folgendes aufweisend:
eine Kamera (204), und
eine Anzeigevorrichtung (206),
wobei die tragbare Computervorrichtung **dadurch**
**gekennzeichnet ist, dass** sie einen Prozessor (202) aufweist, der für Folgendes ausgelegt ist:
Zugreifen auf ein oder mehrere von der Kamera aufgenommene Bilder,
Identifizieren einer Schweißvorrichtung (102, 104) basierend auf dem einen oder den mehreren Bildern, wobei die Schweißvorrichtung über eine Leistungsversorgung (102) oder einen Drahtvorschub (104) verfügt, und
basierend auf der identifizierten Schweißvorrichtung, Darstellen einer Benutzeroberfläche auf der Anzeigevorrichtung (206), die dazu ausgelegt ist, interaktiv Informationen bezüglich der identifizierten Schweißvorrichtung bereitzustellen, wobei die Benutzeroberfläche dazu ausgelegt ist, Gerätekonfigurationsanweisungen entsprechend der identifizierten Schweißvorrichtung (102, 104) bereitzustellen.

2. Tragbare Computervorrichtung (126) nach Anspruch 1, wobei der Prozessor (202) dazu ausgelegt ist, das eine oder die mehreren Bilder über die Anzeigevorrichtung (206) anzuzeigen.

3. Tragbare Computervorrichtung (126) nach Anspruch 2, wobei der Prozessor (202) dazu ausgelegt ist, auf die Bilder zuzugreifen, das eine oder die mehreren Bilder anzuzeigen, die Schweißvorrichtung (102, 104) zu identifizieren, und die sich auf die Schweißvorrichtung beziehenden Informationen im Wesentlichen in Echtzeit anzuzeigen, oder
wobei der Prozessor dazu ausgelegt ist, die angezeigten Bilder mit einer oder mehreren Grafiken zu überlagern.

4. Tragbare Computervorrichtung (126) nach Anspruch 1, wobei der Prozessor (202) dazu ausgelegt ist, eine oder mehrere Komponenten der Schweißvorrichtung (102, 104) basierend auf dem einen oder den mehreren Bildern zu identifizieren, und
optional, wobei die Benutzeroberfläche Komponenteninformationen enthält, die der einen oder den mehreren Komponenten entsprechen, wobei die eine oder die mehreren Komponenten identifiziert werden, nachdem die Schweißvorrichtung in einer vorbestimmten Schwellenwertanzahl von Bildern in der Bildserie identifiziert wurde.

5. Tragbare Computervorrichtung (126) nach Anspruch 1, wobei der Prozessor (202) dazu ausgelegt ist, die Schweißvorrichtung (102, 104) über mindestens eines der Folgenden zu identifizieren:
Empfangen von Informationen basierend auf dem Identifizieren von elektronisch lesbaren Kennzeichnungen, die in den Bildern vorhanden sind; oder
Ausführen einer Bilderkennungsverarbeitung des Bildes zur Identifizierung eines Schweißvorrichtungsmodells.

6. Tragbare Computervorrichtung (126) nach Anspruch 1, wobei der Prozessor (202) dazu ausgelegt ist, die Schweißvorrichtung (102, 104) über eine Bilderkennungsverarbeitung zu identifizieren, um basierend auf den Bildern mindestens eines von Folgendem zu identifizieren: eine Anzahl von Eingabevorrichtungen, mindestens einen Eingabevorrichtungstyp, eine Anzahl von Anzeigevorrichtungen, einen Anzeigevorrichtungstyp, Modellnummerntext, ein grafisches Logo, Eingabevorrichtungsanzeigetext, eine Eingabevorrichtungsanzeigegrafik, eine grafische Anordnung, eine Anordnung von Benutzereingabevorrichtungen, Ausgabevorrichtungen, oder Benutzereingabe- und ausgabevorrichtungen, einen Kommunikationsverbindertyp, eine Kommunikationsverbinderstelle, eine positive Leistungsversorgungsanschlussbolzenstelle, eine negative Leistungsversorgungsanschlussbolzenstelle, eine Entlüftungsstelle, eine Gehäusegröße, oder eine Gehäuseform.

7. Tragbare Computervorrichtung (126) nach Anspruch 1, wobei die Benutzeroberfläche dazu ausgelegt ist, Schweißtrainingsanweisungen bereitzustellen, die der identifizierten Schweißvorrichtung (102, 104) entsprechen.

8. Tragbare Computervorrichtung (126) nach Anspruch 7, ferner eine Kommunikationsvorrichtung (214) aufweisend, um mit einer Schweißvorrichtung kommunikativ in Verbindung zu stehen, und wobei die Schweißtrainingsanweisungen mindestens eines von Folgendem aufweisen:
Anweisungen für einen Benutzer zum Bedienen der Schweißvorrichtung (102, 104), bevor ein Benutzer (124) einen Schweißvorgang beginnt, oder
Anweisungen für einen Benutzer zum Bedienen der Schweißvorrichtung nach Abschluss des Schweißvorgangs.

9. Tragbare Computervorrichtung (126) nach Anspruch 8, ferner einen maschinenlesbaren Speicher (210) aufweisend und wobei die Schweißtrainingsanweisungen in dem Speicher gespeichert werden, oder
wobei der Prozessor (202) ferner dazu ausgelegt ist, die Schweißtrainingsanweisungen von einem Server (136) zu empfangen.

10. Tragbare Computervorrichtung (126) nach Anspruch 7, wobei die Anweisungen ein Video aufweisen.

11. Tragbare Computervorrichtung (126) nach Anspruch 1, ferner eine Kommunikationsvorrichtung (214) aufweisend, um mit einer Schweißvorrichtung kommunikativ in Verbindung zu stehen, wobei der Prozessor (202) dazu ausgelegt ist, mit der Schweißvorrichtung (102, 104) über die Kommunikationsvorrichtung kommunikativ in Verbindung zu stehen.

12. Tragbare Computervorrichtung (126) nach Anspruch 11, wobei die tragbare Computervorrichtung mit der Schweißvorrichtung (102, 104) über eine der Folgenden kommunikativ in Verbindung steht: Bluetooth, Wi-Fi, ZigBee oder Z-Wave.

13. Tragbare Computervorrichtung (126) nach Anspruch 12, ferner aufweisend eine Eingabevorrichtung (206), wobei der Prozessor (202) dazu ausgelegt ist, eine Benutzereingabe von der Eingabevorrichtung zu empfangen und die Schweißvorrichtung (102, 104) gemäß einer empfangenen Benutzereingabe zu konfigurieren, und
optional, wobei der Prozessor ferner zu Folgendem ausgelegt ist:
Empfangen von Informationen bezüglich der Schweißvorrichtung, wobei die Informationen Bilder von internen Komponenten der Schweißvorrichtung beinhalten; und
Anzeigen der Bilder der internen Komponenten der Schweißvorrichtung über die Anzeigevorrichtung (206).

14. Tragbare Computervorrichtung (126) nach Anspruch 1, wobei der Prozessor (202) ferner für Folgendes ausgelegt ist:
Empfangen von Geräteserviceinformationen bezüglich der Schweißvorrichtung (102, 104), und
Anzeigen der Geräteserviceinformationen über die Anzeigevorrichtung (206), oder
wobei der Prozessor ferner für Folgendes ausgelegt ist:
Empfangen, über eine Eingabevorrichtung (206), einer Auswahl einer Aufgabe, die unter Verwendung der identifizierten Schweißvorrichtung auszuführen ist, und
Anzeigen von Grafiken auf der Benutzeroberfläche basierend auf Stellen innerhalb der Bilder der einen oder der mehreren Komponenten, die mit den Grafiken verbunden sind, in einer Sequenz basierend auf der auszuführenden Aufgabe.

## Revendications

1. Dispositif informatique portable (126), comprenant :
une caméra (204) ; et
un dispositif d'affichage (206) ;
le dispositif informatique portable étant **caractérisé en ce qu'**il comprend un processeur (202) configuré pour :
accéder à une ou plusieurs images capturées par la caméra ;
identifier un dispositif de type soudage (102, 104) sur la base des une ou plusieurs images, dans lequel le dispositif de type soudage est une alimentation électrique (102) ou un dispositif d'alimentation en fil (104) ; et
sur la base du dispositif de type de soudage identifié, présenter une interface sur le dispositif d'affichage (206) configurée pour fournir de manière interactive des informations relatives au dispositif de type de soudage identifié ; dans lequel l'interface est configurée pour fournir des instructions de configuration d'équipement correspondant au dispositif de type de soudage (102, 104) identifié.

2. Dispositif informatique portable (126) selon la revendication 1, dans lequel le processeur (202) est configuré pour afficher les une ou plusieurs images par l'intermédiaire du dispositif d'affichage (206).

3. Dispositif informatique portable (126) selon la revendication 2, dans lequel le processeur (202) est configuré pour accéder aux images, afficher les une ou plusieurs images, identifier le dispositif de type soudage (102, 104), et afficher les informations relatives au dispositif de type soudage, sensiblement en temps réel, ou
dans lequel le processeur est configuré pour superposer un ou plusieurs graphiques sur les images affichées.

4. Dispositif informatique portable (126) selon la revendication 1, dans lequel le processeur (202) est configuré pour identifier un ou plusieurs composants du dispositif de type soudage (102, 104) sur la base des une ou plusieurs images, et
facultativement dans lequel l'interface comporte des informations de composant correspondant aux un ou plusieurs composants, les un ou plusieurs composants étant identifiés après que le dispositif de type soudage a été identifié dans un nombre seuil prédéterminé des images dans la série d'images.

5. Dispositif informatique portable (126) selon la revendication 1, dans lequel le processeur (202) est configuré pour identifier le dispositif de type soudage (102, 104) par l'intermédiaire de l'au moins une parmi :
la réception d'informations sur la base de l'identification d'indices lisibles électroniquement présents dans les images ; ou
la réalisation d'un traitement de reconnaissance d'image sur l'image pour identifier un modèle de dispositif de soudage.

6. Dispositif informatique portable (126) selon la revendication 1, dans lequel le processeur (202) est configuré pour identifier le dispositif de type soudage (102, 104) par l'intermédiaire de la réalisation d'un traitement de reconnaissance d'image pour identifier, sur la base des images, l'au moins un parmi : un nombre de dispositifs d'entrée ; un type d'au moins un dispositif d'entrée ; un nombre de dispositifs d'affichage ; un type de dispositif d'affichage ; le texte de numéro de modèle ; un logo graphique ; le texte indicateur de dispositif d'entrée ; un graphique indicateur de dispositif d'entrée ; un agencement graphique ; un agencement de dispositifs d'entrée utilisateur, de dispositifs de sortie, ou des dispositifs d'entrée et des dispositifs de sortie utilisateur ; un type de connecteur de communication ; un emplacement de connecteur de communication ; un emplacement de borne à tige de puissance positive ; un emplacement de borne à tige de puissance négative ; un emplacement d'ouverture d'aération ; une taille de boîtier ; ou une forme de boîtier.

7. Dispositif informatique portable (126) selon la revendication 1, dans lequel l'interface est configurée pour fournir des instructions d'entraînement de soudage correspondant au dispositif de type de soudage (102, 104) identifié.

8. Dispositif informatique portable (126) selon la revendication 7, comprenant en outre un dispositif de communication (214) pour communiquer avec un équipement de soudage, et dans lequel les instructions d'entraînement de soudage comprennent au moins les unes parmi :
des instructions pour qu'un utilisateur manipule le dispositif de type soudage (102, 104) avant qu'un utilisateur (124) ne commence une opération de type soudage ; ou
des instructions pour qu'un utilisateur manipule le dispositif de type soudage après avoir terminé l'opération de type soudage.

9. Dispositif informatique portable (126) selon la revendication 8, comprenant en outre une mémoire lisible par machine (210) et les instructions d'entraînement de soudage sont stockées sur la mémoire, ou
dans lequel le processeur (202) est en outre configuré pour recevoir les instructions d'entraînement de soudage depuis un serveur (136).

10. Dispositif informatique portable (126) selon la revendication 7, dans lequel l'instruction comprend une vidéo.

11. Dispositif informatique portable (126) selon la revendication 1, comprenant en outre un dispositif de communication (214) pour communiquer avec un équipement de soudage, dans lequel le processeur (202) est configuré pour établir des communications avec le dispositif de type soudage (102, 104) par l'intermédiaire du dispositif de communication.

12. Dispositif informatique portable (126) selon la revendication 11, dans lequel le dispositif informatique portable communique avec le dispositif de type soudage (102, 104) par l'intermédiaire de l'un parmi : Bluetooth, Wi-Fi, ZigBee ou onde Z.

13. Dispositif informatique portable (126) selon la revendication 12, comprenant en outre un dispositif d'entrée (206), dans lequel le processeur (202) est configuré pour recevoir une entrée d'utilisateur en provenance du dispositif d'entrée, et pour configurer le dispositif de type soudage (102, 104) selon l'entrée d'utilisateur reçue, et
facultativement dans lequel le processeur est en outre configuré pour :
recevoir des informations concernant le dispositif de type soudage, dans lequel les informations comprennent des images de composants intérieurs du dispositif de type soudage ; et
afficher les images des composants intérieurs du dispositif de type soudage par l'intermédiaire du dispositif d'affichage (206).

14. Dispositif informatique portable (126) selon la revendication 1, dans lequel le processeur (202) est en outre configuré pour :
recevoir des informations de service d'équipement concernant le dispositif de type soudage (102, 104) ; et
afficher les informations de service d'équipement par l'intermédiaire du dispositif d'affichage (206), ou
dans lequel le processeur est configuré pour :
recevoir, par l'intermédiaire d'un dispositif d'entrée (206), une sélection d'une tâche à réaliser en utilisant le dispositif de type soudage identifié ; et
afficher des graphiques dans l'interface, sur la base des emplacements au sein des images des un ou plusieurs composants qui sont associés aux graphiques, selon une séquence sur la base de la tâche à réaliser.
